(19) Europäisches Patentamt
European Patent Office
Office européen des brevets

(11) EP 0 942 022 B1

(12) EUROPÄISCHE PATENTSCHRIFT

(45) Veröffentlichungstag und Bekanntmachung des Hinweises auf die Patenterteilung:
**07.07.2004 Patentblatt 2004/28**

(51) Int Cl.⁷: **C08G 18/67**, C08G 18/68, C09D 175/16

(21) Anmeldenummer: **99104933.9**

(22) Anmeldetag: **11.03.1999**

# (54) Härtbares Polyurethanpolymerisat, Dispersion auf Basis dieses Polymerisats, Verfahren zu seiner Herstellung und seine Verwendung

Hardenable polyurethane polymerisate, dispersion based thereon, its preparation process and its use

Polyuréthane durcissable, dispersion à base de ceci, son procédé de préparation et son utilisation

(84) Benannte Vertragsstaaten:
**CH DE FR GB IT LI SE**

(30) Priorität: **12.03.1998 DE 19810793**

(43) Veröffentlichungstag der Anmeldung:
**15.09.1999 Patentblatt 1999/37**

(73) Patentinhaber: **BASF AKTIENGESELLSCHAFT
67056 Ludwigshafen (DE)**

(72) Erfinder:
- **Paulus, Wolfgang
55218 Mainz (DE)**
- **Lebkücher, Werner
67159 Friedelsheim (DE)**
- **Königer, Rainer
67061 Ludwigshafen (DE)**
- **Reich, Wolfgang
67133 Maxdorf (DE)**
- **Menzel, Klaus
67069 Ludwigshafen (DE)**

(74) Vertreter: **Kinzebach, Werner, Dr. et al
Patentanwälte,
Reitstötter, Kinzebach & Partner,
Ludwigsplatz 4
67059 Ludwigshafen (DE)**

(56) Entgegenhaltungen:
**EP-A- 0 753 531**
**US-A- 5 089 376**
**US-A- 5 306 764**

EP 0 942 022 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein härtbares Polyurethanpolymerisat, welches wenigstens ein hydroxylgruppenhaltiges Präpolymer mit mindestens einer thermisch oder photochemisch radikalisch polymerisierbaren $\alpha,\beta$-ethylenisch ungesättigten Doppelbindung, einpolymerisiert enthält. Die Erfindung betrifft weiterhin eine wässrige Polymerdispersion, die ein solches härtbares Polymerisat in dispergierter Form enthält, Verfahren zu ihrer Herstellung und ihre Verwendung zur Herstellung von Beschichtungen.

Wässrige Polyurethandispersionen, die Komponenten mit ethylenisch ungesättigten Gruppen enthalten, haben eine breite Anwendung gefunden. Sie dienen vor allem der Herstellung von Beschichtungen auf nicht-flexiblen Substraten, wie z. B. Holz, und flexiblen Substraten, wie z. B. Leder. Auf Grund ihrer Fähigkeit zur Vernetzung, erhält man aus diesen Dispersionen Filme mit guten anwendungstechnischen Eigenschaften, wie z. B. Chemikalienbeständigkeit und erhöhter mechanischer Stabilität, verglichen mit nicht vernetzbaren Polyurethandispersionen. Auch zur Herstellung von Beschichtungen auf Substraten, die nicht oder nur gering thermisch belastbar sind, werden im Allgemeinen Polyurethandispersionen eingesetzt, die strahlungshärtbar sind. Eine wichtige Eigenschaft dieser durch UV-Bestrahlung oder mittels Elektronenstrahlung härtbaren Dispersionen ist, dass bereits nach dem Verdunsten des enthaltenen Wassers Filme resultieren, die eine möglichst klebfreie und gegebenenfalls bereits mechanisch beanspruchbare Oberfläche ergeben. Dies ermöglicht zum einen auch eine Beschichtung von Substraten, die auf Grund ihrer äußeren Form Strahlenschattenbereiche aufweisen und somit technisch bedingt nicht vollständig der Strahlungshärtung zugängig sind. Zum anderen können die Substrate so bereits vor der Härtung mechanisch bearbeitet werden. Dies ist insbesondere bei der Herstellung von Beschichtungen auf Holz wichtig, da hier die Oberflächen vor der Härtung im Allgemeinen geschliffen werden, z. B. um die aufgestellten Holzfasern zu entfernen und um in einem zweiten Lackierschritt eine glatte Fläche zu erhalten. Ein weiterer Vorteil liegt in der Klebfreiheit dieser Beschichtungen, so dass die Oberflächen, z. B. beim Stapeln, nicht aneinander kleben.

Die DE-A-34 37 918 beschreibt wässrige Oligourethandispersionen mit eingebauten, ungesättigten Gruppen und ihre Verwendung zur Herstellung von hochglänzenden Lacken auf Leder. Zu ihrer Herstellung wird ein isocyanatgruppenhaltiges Oligourethan-Präpolymer mit einem Hydroxylgruppen aufweisenden Ester aus Acrylsäure und/oder Methacrylsäure und aus mindestens zweiwertigen aliphatischen Alkoholen, wie z. B. Hydroxyalkyl(meth)acrylaten oder Di(meth)acrylsäureestern des 1,1,1-Trimethylolpropans oder Glycerins, umgesetzt.

Die EP-A-0 554 784 beschreibt wässrige Dispersionen eines strahlungshärtbaren Polyurethans, welches als Aufbaukomponenten Isocyanurat- oder Biuretgruppen aufweisende Polyisocyanate und Polyole enthält.

Nach Verdunsten des Wassers erhält man aus den zuvor genannten Polyurethandispersionen Überzüge, die vor der Strahlungshärtung noch nicht mechanisch belastbar sind bzw. klebrige Oberflächen ergeben.

Die EP-A-0 209 684 beschreibt lagerstabile, strahlungshärtbare, isocyanatgruppenfreie wässrige Emulsionen auf der Basis ionischer Urethanharnstoffacrylate. Zu ihrer Herstellung wird ein cycloaliphatisches Polyisocyanat in einem organischen Lösungsmittel zuerst mit einem Hydroxyalkylacrylat und einer Polyhydroxylverbindung und anschließend mit Natriumsalzen von Aminocarbonsäuren und/oder mit aliphatischen Diaminen umgesetzt und danach durch Zugabe von Wasser und Abdestillieren des Lösungsmittels emulgiert. Die mechanischen Eigenschaften der aus diesen Dispersionen erhaltenen Filme sind insbesondere im Hinblick auf die Schleifbarkeit verbesserungswürdig.

Keine der zuvor genannten Publikationen beschreibt Polymerdispersionen auf Basis von Polyurethanen, die hydroxylgruppenhaltige Präpolymere mit $\alpha,\beta$-ethylenisch ungesättigten Doppelbindungen einpolymerisiert enthalten.

Die US-A-4,357,221 beschreibt ein Verfahren zur Beschichtung elektrisch leitender Teile, wobei ein anionisches Polyurethanadditionsprodukt eingesetzt wird, welches $\alpha,\beta$-ethylenisch ungesättigte, strahlungshärtbare Doppelbindungen aufweist. Zur Herstellung dieses Produktes wird eine Lösung eines Polyurethans auf Basis eines Acrylesterdiols, eines nieder- oder hochmolekularen Kettenverlängerers und eines Polyisocyanates mit einem Mercaptocarbonsäuresalz umgesetzt. Die Einführung der Carboxylatgruppe in das Polyurethan erfolgt dabei nicht durch Addition der Mercaptogruppe an eine Isocyanatgruppe, sondern an eine der im Polyurethan vorhandenen Doppelbindungen unter Ausbildung einer Mercaptoetherbrücke. Die resultierenden anionischen Polyurethane weisen einen höheren Gehalt an ionischen Gruppen auf als im Allgemeinen für Lackbindemittel üblich ist und der bei mindestens 4 % liegt. Die Doppelbindungswerte der Polyurethane werden mit einem theoretisch möglichen Bereich von 0,3 bis 3 mol pro 1 000 g Polyurethan angegeben, die konkreten Ausführungsbeispiele umfassen jedoch lediglich Polyurethane mit Doppelbindungswerten von maximal 0,96 Mol pro 1000 g.

Die DE-A-40 31 732 beschreibt strahlungshärtbare, wässrige Bindemitteldispersionen, die

A) 5 bis 95 Gew.-% eines selbstdispergierbaren Polyurethans mit einem Gehalt an polymerisierbaren, ethylenisch ungesättigten Gruppen von maximal 2 mol/kg Polyurethan,

B) 5 bis 95 Gew.-% eines mit Hilfe von C) dispergierbaren Präpolymers oder Präpolymerengemisches mit einem Gehalt an polymerisierbaren, ethylenisch ungesättigten Gruppen von 1 bis 10 mol/kg Präpolymer oder Präpolymerengemisch und

C) 0 bis 30 Gew.-% eines Schutzkolloids aufweisen.

Bei der Komponente A) alleine handelt es sich nicht um ein acrylathaltiges Präpolymer. Bei den Präpolymeren B) kann es sich um Polyester, Polyether, Polyepoxide oder Polyurethane handeln, die den wässrigen Dispersionen separat zugegeben werden, die also nicht an die Polyurethankomponente A) gebunden sind. Der in den Ausführungsbeispielen für Dispersion A) eingesetzte Gehalt an polymerisierbaren, ethylenisch ungesättigten Gruppen beträgt maximal 0,32 mol/kg des Gemisches aus A), B) und C). Ein Schutzkolloid ist bei den Ausführungsbeispielen zwingend vorhanden. Die mit den Dispersionen auf Basis einer Mischung aus A) und B) erhaltenen Beschichtungen sind in Bezug auf ihre anwendungstechnischen Eigenschaften verbesserungswürdig. So beträgt die Pendelhärte der strahlungsgehärteten Filme der Ausführungsbeispiele maximal 115 s.

Die EP-A-0 392 352 beschreibt wässrige Dispersionen von durch Einwirkung von energiereicher Strahlung vernetzbaren Polyurethanen aus

a) 1 Grammäquivalent NCO eines Polyisocyanates,

b) 0,1 bis 0,8 Grammäquivalenten OH eines Polyols mit einem Molekulargewicht zwischen 400 und 6000 g/mol,

c) 0 bis 0,8 Grammäquivalenten OH eines Polyols mit einem Molekulargewicht zwischen 62 und 399 g/mol,

d) 0 bis 0,4 Grammäquivalenten NH eines Polyamins mit mindestens zwei gegenüber Isocyanat reaktiven Aminogruppen,

e) 0 bis 0,4 Grammäquivalent OH eines Aminoalkohols mit mindestens einer gegenüber Isocyanat reaktiven Aminogruppe,

f) 0,05 bis 0,5 Grammäquivalent OH oder NH einer Verbindung mit Ionengruppen oder in Ionengruppen überführbaren Gruppen mit mindestens einer gegenüber Isocyanat reaktiven Hydroxyl- oder Aminogruppe,

g) 0 bis 0,2 Grammäquivalent OH eines monofunktionellen Polyetherols sowie

h) einer Verbindung mit mindestens einer ethylenisch ungesättigten Gruppe und mindestens einer Hydroxylgruppe,

mit den Maßgaben, dass (i) die Summe der OH- und NH-Grammäquivalente zwischen 0,9 und 1,2 liegt, (ii) die Komponenten unter a) bis h) in Form von Einzelkomponenten oder Gemischen vorliegen können, und (iii) die ethylenisch ungesättigte Komponente h) in Mengen von 0,02 bis 0,08 Grammäquivalent OH eingesetzt wird. Der Gehalt an polymerisierbaren, ethylenisch ungesättigten Gruppen pro 1 000 g Polyurethan ist somit sehr gering und beträgt maximal 0,166 mol/kg.

Die DE-A-195 25 489 und die EP-A-0 753 531 beschreiben Polyesteracrylaturethan-Dispersionen auf Basis von hydroxylgruppenhaltigen Polyesteracrylatpräpolymeren. Die Herstellung dieser Dispersionen erfolgt durch Polyaddition von

A) 40 bis 90 Gew.-% einem oder mehreren hydroxylgruppenhaltigen Polyesteracrylatpräpolymeren mit einem OH-Gehalt von 40 bis 120 mg KOH/g und

B) 0,1 bis 20 Gew.-% einer oder mehrerer mono- und/oder difunktioneller gegenüber Isocyanatgruppen reaktiven Verbindungen, die kationische, anionische und/oder durch Ethereinheiten dispergierend wirkende Gruppen enthalten mit

C) 10 bis 50 Gew.-% einem oder mehreren Polyisocyanaten sowie anschließende Umsetzung mit

D) 0,1 bis 10 Gew.-% einem oder mehreren Di- und/oder Polyaminen.

Sie eignen sich für die Verwendung als Lackbindemittel. Die Ausführungsbeispiele verwenden dabei als Komponente A) jedoch lediglich Präpolymere mit Hydroxylzahlen von 80 bis 82 mg KOH/g. Der Gehalt an polymerisierbaren, ethylenisch ungesättigten Gruppen wird nicht offenbart. Die mit diesen Dispersionen erhaltenen Beschichtungen sind im Hinblick auf ihre anwendungstechnischen Eigenschaften verbesserungswürdig. So weisen die noch nicht strahlungsgehärteten Filme eine zu geringe Pendelhärte auf, d. h. unter mechanischer Belastung haften die beschichteten Substrate aneinander und an anderen unbeschichteten Oberflächen und bei einer anschließenden Trennung der Substrate können Oberflächenschäden zurückbleiben. Dies ist insbesondere von Nachteil, wenn die Dispersionen, wie zuvor beschrieben, zur Beschichtung von Oberflächen eingesetzt werden, die bei der Strahlungshärtung schlecht zugängige Schattenbereiche aufweisen. Auch die gehärteten Filme sind in Bezug auf ihre mechanischen Eigenschaften, insbesondere einer guten Oberflächenhärte bei gleichzeitiger Flexibilität des Films, verbesserungswürdig.

Der vorliegenden Erfindung liegt die Aufgabe zu Grunde, wässrige Dispersionen härtbarer Polyurethanpolymerisate zur Verfügung zu stellen, die eine gute Pendelhärte der getrockneten, nicht strahlungsgehärteten Verfilmungen aufweisen. Weiterhin ist es wünschenswert, dass die nicht gehärteten Filme mechanisch belastbar sind und somit eine hohe Härte und/oder eine hohe Kratzfestigkeit zeigen. Die strahlungsgehärteten Verfilmungen sollten eine hohe Härte und/oder eine gute Flexibilität aufweisen.

Überraschenderweise wurde nun gefunden, dass die Aufgabe durch wässrige Polymerdispersionen gelöst wird, die wenigstens ein härtbares Polyurethan umfassen, welches wenigstens ein hydroxylgruppenhaltiges Präpolymer mit mindestens einer radikalisch oder photochemisch polymerisierbaren $\alpha,\beta$-ethylenisch ungesättigten Doppelbindung aufweist, wobei die Hydroxylzahl des Präpolymers und gegebenenfalls einer weiteren hydroxylgruppenhaltigen Komponente in einem Bereich von 121 bis 300 mg KOH/g liegt. Überraschenderweise wurde weiterhin gefunden, dass gute mechanische Eigenschaften der nicht-gehärteten sowie der gehärteten Filme erzielt werden, wenn man als hydroxylgruppenhaltiges Präpolymer ein Reaktionsprodukt oder eine Mischung einsetzt, die ein Epoxidacrylat umfasst.

Gegenstand der vorliegenden Erfindung ist daher ein härtbares Polyurethanpolymerisat, welches

A) 40 bis 80 Gew.-%, bezogen auf das Gesamtgewicht der Komponenten A) bis F), wenigstens eines hydroxylgruppenhaltigen Präpolymers mit mindestens einer radikalisch oder photochemisch polymerisierbaren $\alpha,\beta$-ethylenisch ungesättigten Doppelbindung, wobei das Präpolymer A) ein Reaktionsprodukt oder eine Mischung aus

a) wenigstens einem Polyesteracrylat und/oder Polyetheracrylat und/oder Polyurethanacrylat und

b) wenigstens einem Epoxyacrylat

ist,

B) 0,1 bis 20 Gew.-%, bezogen auf das Gesamtgewicht der Komponenten A) bis F), wenigstens einer Verbindung mit mindestens einer gegenüber Isocyanatgruppen reaktiven Hydroxyl- und/oder primären oder sekundären Aminogruppe und zusätzlich wenigstens einer polaren funktionellen Gruppe,

C) 0,1 bis 10 Gew.-%, bezogen auf das Gesamtgewicht der Komponenten A) bis F), wenigstens einer Verbindung, ausgewählt unter Diaminen, Polyaminen und Mischungen davon,

D) 0 bis 20 Gew.-%, bezogen auf das Gesamtgewicht der Komponenten A) bis F), wenigstens einer weiteren von A), B), C) und E) verschiedenen Verbindung mit mindestens zwei gegenüber Isocyanatgruppen reaktiven Gruppen, wobei es sich um Hydroxylgruppen und Mischungen von Hydroxylgruppen und/oder primären oder sekundären Aminogruppen handelt,

E) 0 bis 20 Gew.-%, bezogen auf das Gesamtgewicht der Komponenten A) bis F), wenigstens einer Verbindung mit einer gegenüber Isocyanatgruppen reaktiven Gruppe,

F) 10 bis 50 Gew.-%, bezogen auf das Gesamtgewicht der Komponenten A) bis F), wenigstens eines Polyisocyanates

einpolymerisiert enthält, und die Salze davon, das dadurch gekennzeichnet ist, dass die Summe der Hydroxylzahlen der Komponenten A) und D) in einem Bereich von 121 bis 300 mg KOH/g liegt.

Die Summe der Hydroxylzahlen der Komponenten A) und D) liegt vorzugsweise in einem Bereich von 123 bis 250 mg KOH/g, insbesondere 125 bis 220 mg KOH/g, speziell 125 bis 200 mg KOH/g und spezieller 125 bis 180 mg KOH/g.

Die erfindungsgemäßen Polymerisate enthalten die Komponente A) im Allgemeinen in einem Anteil von etwa 50 bis 75 Gew.-%, bevorzugt etwa 50 bis 70 Gew.-%, speziell etwa 50 bis 60 Gew.-%, bezogen auf das Gesamtgewicht der Komponenten A) bis F), einpolymerisiert. Nach einer bevorzugten Ausführungsform liegt die Hydroxylzahl des Präpolymers A) in einem Bereich von etwa 121 bis 300 mg KOH/g, bevorzugt etwa 125 bis 215 mg KOH/g, insbesondere bevorzugt etwa 130 bis 200 mg KOH/g, speziell etwa 135 bis 180 mg KOH/g, spezieller etwa 140 bis 170 mg

KOH/g. Gewünschtenfalls kann dann auf den Einsatz einer Komponenten D) in den erfindungsgemäßen Polymerisaten verzichtet werden. Nach einer möglichen Ausführungsform können diese jedoch auch ein Präpolymer A) mit einer Hydroxylzahl von mindestens 121 mg KOH/g und zusätzlich eine Komponente D) enthalten.

Der Gehalt an polymerisierbaren, α,β-ethylenisch ungesättigten Doppelbindungen liegt in einem Bereich von 1,0 bis 4,0 mol pro 1000 g Polymerisat, bevorzugt 1,1 bis 3,8 mol, insbesondere 1,2 bis 3,5 mol, speziell 1,5 bis 3,3 mol und spezieller 2,0 bis 3,2 mol pro 1 000 g Polymerisat.

Der Gehalt an polaren funktionellen Gruppen der erfindungsgemäßen Polymerisate liegt im Allgemeinen in einem Bereich von etwa 1,3 bis 3,5 %, bevorzugt von 1,5 bis 3,3 Gew.-%.

Der K-Wert des Präpolymers vor der Dispergierung und Kettenverlängerung, bestimmt nach E. Fikentscher, Cellulose-Chemie 13 (1932), S. 58-64, an einer 1%igen Lösung in Dimethylformamid, liegt in einem Bereich von etwa 20 bis 70, bevorzugt 30 bis 60, insbesondere 45 bis 55.

Geeignete hydroxylgruppenhaltige Präpolymere A) mit mindestens einer radikalisch oder photochemisch polymerisierbaren α,β-ethylenisch ungesättigten Doppelbindung sind ein Reaktionsprodukt oder eine Mischung aus a) wenigstens einem Polyesteracrylat und/oder Polyetheracrylat und/oder Polyurethanacrylat und b) wenigstens einem Epoxyacrylat.

Geeignete Polyesteracrylate sind z. B. die Polykondensationsprodukte von α,β-ethylenisch ungesättigten Mono- und/oder Dicarbonsäuren und deren Anhydriden mit Polyesterpolyolen. Als α,β-ethylenisch ungesättigte Monound/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc eingesetzt werden. Bevorzugt werden Acrylsäure und Methacrylsäure eingesetzt. Geeignete Polyesterole sind lineare und verzweigte Polymere mit endständigen OH-Gruppen, z. B. solche mit mindestens zwei OH-Endgruppen. Die Polyesterole lassen sich in einfacher Weise durch Veresterung von aliphatischen, cycloaliphatischen und aromatischen Di-, Tri- und/oder Polycarbonsäuren mit Di-, Triund/oder Polyolen herstellen. Geeignete Carbonsäuren sind z. B. Dicarbonsäuren mit 2 bis 20 Kohlenstoffatomen, vorzugsweise 4 bis 15 Kohlenstoffatomen, beispielsweise Malonsäure, Bernsteinsäure, Adipinsäure, Glutarsäure, Pimelinsäure, Korksäure, Sebacinsäure, Dodecandisäure, Phthalsäure, Terephthalsäure, Isophthalsäure, Cyclohexandicarbonsäure etc. Geeignet sind auch Sulfobernsteinsäure und Sulfoisophthalsäure. Die Dicarbonsäuren können einzeln oder als Gemische eingesetzt werden. Geeignete Diole sind z. B. Glykole, bevorzugt Glykole mit 2 bis 25 Kohlenstoffatomen. Beispiele für geeignete Glykole sind z. B. 1,2-Ethandiol, 1,3-Propandiol, 1,4-Butandiol, 1,5-Pentandiol, 1,6-Hexandiol, 1,10-Decandiol, Diethylenglykol, 2,2,4-Trimethylpentandiol-1,5, 2,2-Dimethylpropandiol-1,3, 1,4-Dimethylolcyclohexan, 1,6-Dimethylolcyclohexan und ethoxilierte/propoxilierte Produkte des 2,2-Bis-(4-hydroxyphenyl)-propan (Bisphenol-A), etc. Geeignete Triole und Polyole weisen z. B. 3 bis 25, bevorzugt 3 bis 18 Kohlenstoffatome auf. Dazu zählen z. B. Glycerin, Trimethylolpropan, Erythrit, Pentaerythrit, Sorbit und deren Alkoxilate etc. Geeignete Polyesterole lassen sich ebenfalls durch Polymerisation von Lactonen, z. B. Lactonen mit 3 bis 20 Kohlenstoffatomen, herstellen. Als Lactone für die Herstellung der Polyesterole eignen sich z. B. α,α-Dimethyl-β-propiolacton, γ-Butyrolacton, ε-Caprolacton, etc.

Weitere geeignete Polyesteracrylate sind auch Kondensationsprodukte auf Basis von Hydroxylgruppen aufweisenden Estern der Acrylsäure und/oder Methacrylsäure mit mindestens zweiwertigen Alkoholen. Dazu zählen z. B. 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat,-6-Hydroxyhexylacrylat, 6-Hydroxyhexylmethacrylat, 3-Hydroxy-2-ethylhexylacrylat, 3-Hydroxy-2-ethylhexylmethacrylat, Di(meth)acrylsäureester des 1,1,1-Trimethylolpropans oder des Glycerins. Diese Hydroxylgruppen aufweisenden Ester können mit Polyesterolen mit endständigen Carboxylgruppen oder den diese Polyesterole bildenden Dicarbonsäuren und Glykolen zu Polyesteracrylaten polykondensiert werden.

Geeignete Polyetheracrylate A) sind z. B. die Polykondensationsprodukte der zuvor genannten α,β-ethylenisch ungesättigten Monound/oder Dicarbonsäuren und deren Anhydride mit Polyetherolen. Als Polyetherole können dabei lineare oder verzweigte endständige Hydroxylgruppen aufweisende Substanzen eingesetzt werden, die Etherbindungen enthalten und ein Molekulargewicht im Bereich von z. B. etwa 500 bis 10 000, vorzugsweise von 600 bis 5000, besitzen. Geeignete Polyetherole können leicht durch Polymerisation von cyclischen Ethern, wie Tetrahydrofuran oder durch Umsetzung von einem oder mehreren Alkylenoxiden mit 2 bis 4 Kohlenstoffatomen im Alkylrest mit einem Startermolekül, das zwei aktive Wasserstoffatome im Alkylenrest gebunden enthält, hergestellt werden. Als Alkylenoxide seien beispielsweise Ethylenoxid, 1,2-Propylenoxid, Epichlorhydrin, 1,2- und 2,3-Butylenoxid genannt. Die Alkylenoxide können einzeln, alternierend nacheinander oder als Mischung eingesetzt werden. Als Startermolekül kommen z. B. Wasser, die zuvor genannten Glykole, Polyesterole, Triole und Polyole, Amine, wie Ethylendiamin, Hexamethylendiamin und 4,4'-Diaminodiphenylmethan sowie Aminoalkohole, wie Ethanolamin, in Betracht. Ebenso wie die Polyesterole können auch die Polyetherole allein oder in Mischungen verwendet werden.

Geeignete Polyurethanacrylate A) sind z. B. die Polyadditionsprodukte der im Folgenden als Komponente F) beschriebenen Polyisocyanate mit den zuvor beschriebenen Hydroxylgruppen aufweisenden Estern aus Acryl- und/ oder Methacrylsäure mit mindestens zweiwertigen Alkoholen. Als Polyisocyanate werden dabei bevorzugt Diisocyanate, wie z. B. 2,4- und 2,6-Toluylendiisocyanat (TDI) und Isomerengemische davon, Tetramethylxylylendiisocyanat (TMXDI), Tetramethylendiisocyanat, Hexamethylendiisocyanat (HDI) und dessen Trimere, Isophorondiisocyanat (IPDI), Trimethylhexamethylendiisocyanat, Dicyclohexylmethandiisocyanat ($H_{12}$MDI), Xylendiisocyanat (XDI) und Diphenylmethandiisocyanat (MDI) eingesetzt. Bevorzugte Hydroxylgruppen aufweisende Ester der Acrylsäure und/oder Methacrylsäure sind die zuvor genannten Hydroxyalkyl-(meth)acrylate, bevorzugt Hydroxymethylacrylat, Hydroxypropylacrylat und Hydroxyethylmethacrylat.

Geeignete Epoxyacrylate A) sind z. B. die Umsetzungsprodukte von Diglycidethern mit den zuvor genannten $\alpha,\beta$-ethylenisch ungesättigten Mono- und/oder Dicarbonsäuren und deren Anhydriden. Bevorzugt werden Acrylsäure und/oder Methacrylsäure eingesetzt. Glycidether werden durch Umsetzung einer Alkoholkomponente mit einer Epoxidverbindung erhalten, die in $\alpha$-Position zur Epoxidgruppe eine geeignete Abgangsgruppe aufweist. Die Herstellung von Diglycidethern erfolgt im Allgemeinen aus einem aliphatischen, cycloaliphatischen oder aromatischen Diol und Epichlorhydrin als Epoxidkomponente. Für die Glycidetherherstellung geeignete aliphatische Diole sind die zuvor genannten Glykole, bevorzugt 1,4-Butandiol. Als aromatisches Diol wird vorzugsweise Bisphenol-A eingesetzt. Je nach Molmengenverhältnis von Epoxidverbindung zu Diolkomponente können dabei entweder Diglycidether oder mit zunehmender Menge Diol höhermolekulare, hydroxylgruppenhaltige Diepoxide erhalten werden. Zur Herstellung von Epoxyacrylaten, die als alleiniges hydroxylgruppenhaltiges Präpolymer A) eingesetzt werden, wird das Molmengenverhältnis von Epoxidverbindung zu Diolkomponente so gewählt, dass nach abschließender Umsetzung mit der $\alpha,\beta$-ethylenisch ungesättigten Carbonsäurenkomponente ein Epoxyacrylat mit einer erfindungsgemäßen Hydroxylzahl erhalten wird.

Erfindungsgemäß handelt es sich bei dem Präpolymer A) um ein Reaktionsprodukt oder eine Mischung aus

a) wenigstens einem Polyesteracrylat und/oder Polyetheracrylat und/oder Polyurethanacrylat und

b) wenigstens einem Epoxyacrylat.

Wird als Präpolymer A) ein Reaktionsprodukt aus wenigstens einem Polyesteracrylat und/oder Polyetheracrylat und/oder Polyurethanacrylat und einem Epoxyacrylat eingesetzt, so können als Edukte auch Komponenten mit einer Hydroxylzahl eingesetzt werden, die weniger als 121 mg KOH/g beträgt, wenn die Hydroxylzahl der resultierenden Präpolymere A) in dem zuvor beschriebenen Bereich von 121 bis 300 mg KOH/g liegt. Dabei können Epoxyacrylate auf Basis der zuvor genannten Diglycidether sowie auf Basis von Epoxynovolacen, epoxidierten Ölen, wie Soja- oder Leinöl, etc. eingesetzt werden. Bevorzugt werden als Epoxyacrylate die Umsetzungsprodukte aus einem Mol eines Bisphenol A-diglycidethers (z. B. Epikote® 828 der Fa. Shell) mit zwei Molen Acrylsäure oder Methacrylsäure eingesetzt. Die Hydroxylzahl von Epikote® 828-diacrylat beträgt dabei etwa 215 mg KOH/g.

Polyesteracrylate, Polyetheracrylate, Polyurethanacrylate und Epoxyacrylate werden z. B. in N. S. Allen, M. A. Johnson, P. Oldring (Hrsg.) und M. S. Salim, Chemistry & Technology of UV&EB-Curing Formulations for Coatings, Inks & Paints, Vol. 2, SITA Technology, London 1991, beschrieben.

Das Polyurethan enthält die dispergieraktive Komponente B), die mindestens eine gegenüber Isocyanatgruppen reaktive Hydroxylund/oder Aminogruppe und zusätzlich wenigstens eine polare funktionelle Gruppe aufweist, im Allgemeinen in einem Anteil von 0,1 bis 20 Gew.-%, bevorzugt 1,0 bis 10 Gew.-%, insbesondere 2,0 bis 8 Gew.-%, bezogen auf das Gesamtgewicht der Komponenten A) bis F), einpolymerisiert. Die Komponente B) ist dabei ausgewählt unter Substanzen, die wenigstens eine polare funktionelle Gruppe, ausgewählt unter ionogenen und/oder ionischen Gruppen, bevorzugt Carbonsäuregruppen, Sulfonsäuregruppen, Phosphonsäuregruppen, Phosphorsäuregruppen, den Alkalimetall- und Ammoniumsalzen davon, Aminogruppen, quaternären Aminogruppen, sowie Ethergruppen aufweisen.

Geeignete Verbindungen B) enthalten die zuvor genannten ionogenen bzw. ionischen Gruppen und/oder Ethergruppen, welche die Dispergierung der Polyurethane in Wasser begünstigen. Bei den ionogenen bzw. ionischen Gruppen handelt es sich vorzugsweise um Carbonsäuregruppen und/oder Sulfonsäuregruppen und/oder stickstoffhaltige Gruppen (Amine) bzw. Carboxylatgruppen und/oder Sulfonatgruppen und/oder quaternisierte oder protonierte Gruppen. Als Komponente B) können daher z. B. Hydroxycarbonsäuren, wie Hydroxyessigsäure (Glykolsäure), Hydroxypropionsäure (Milchsäure), Hydroxybernsteinsäure (Äpfelsäure) und bevorzugt Dimethylolpropansäure eingesetzt werden.

Geeignete Verbindungen B), die wenigstens eine Sulfonsäuregruppe oder ein Sulfonat als polare funktionelle Gruppe aufweisen, sind z. B. die Diesterdiole oder Polyesterdiole von Dicarbonsäuren, die zusätzlich wenigstens eine Sulfonsäuregruppe oder Metallsulfonatgruppe aufweisen, mit den zuvor als Edukte der Präpolymere A) genannten Diolen. Als Dicarbonsäuren können dabei z. B. Sulfobernsteinsäure, 4-Sulfophthalsäure, 5-Sulfoisophthalsäure, Sulfoterephthalsäure, 4-Sulfonaphthalin-2,7-dicarbonsäure, 5-(4-Sulfophenoxy)terephthalsäure oder die entsprechenden Metallsulfonate eingesetzt werden. Vorzugsweise werden die Alkalisalze der zuvor genannten Sulfodicarbonsäuren, insbesondere die Natrium- und Kaliumsalze, eingesetzt. Besonders bevorzugt sind 5-Natriumsulfoisophthalsäure,

5-Kaliumsulfoisophthalsäure, Natriumsulfoterephthalsäure und Kaliumsulfoterephthalsäure. Weitere geeignete Verbindungen B), die wenigstens eine Sulfonsäure- oder Sulfonatgruppe aufweisen, sind entsprechend substituierte geradkettige oder verzweigte aliphatische, cycloaliphatische oder aromatische Diole. Dazu zählen z. B. 2-Sulfo-1,4-butandiol, 2,5-Dimethyl-3-sulfo-2,5-hexandiol und deren Natrium- und Kaliumsalze.

Brauchbar sind auch Verbindungen B) der Formeln

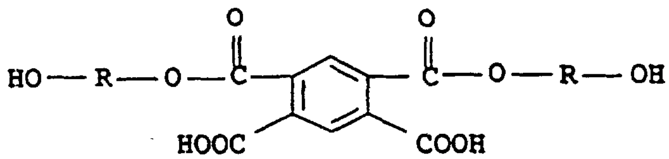

und/oder

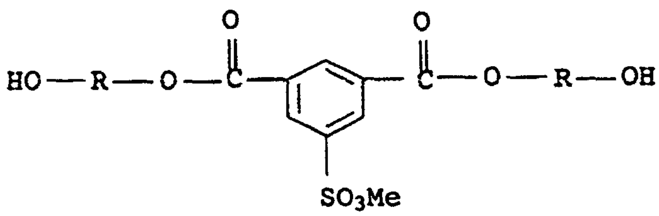

worin R jeweils für eine $C_2$-$C_{18}$-Alkylengruppe steht und Me für Na oder K steht.

Als Komponente B) brauchbar sind auch Verbindungen der Formeln

$$H_2N(CH_2)_n\text{-}NH\text{-}(CH_2)_m\text{-}COO\text{-}M^+$$

$$H_2N(CH_2)_n\text{-}NH\text{-}(CH_2)_m\text{-}SO_3\text{-}M^+$$

worin m und n unabhängig voneinander für eine ganze zahl von 1 bis 8, insbesondere 1 bis 6, stehen und M für Wasserstoff, Li, Na, K oder Ammonium steht. Bevorzugt stehen bei den Verbindungen m und n für 2.

Wenn man als Komponente B) Verbindungen mit stickstoffhaltigen Gruppen verwendet, erhält man kationische Polyurethane. Brauchbare Komponenten B) sind z. B. Verbindungen der allgemeinen Formeln

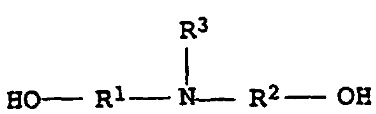 , 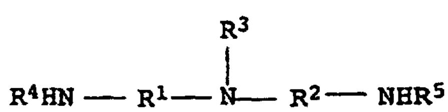 ,

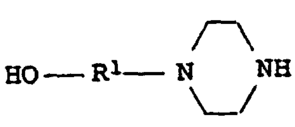 , 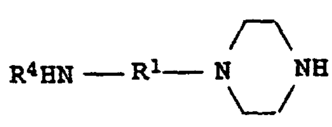 ,

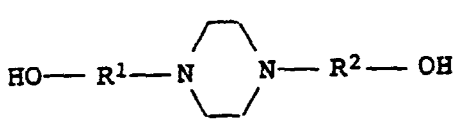 , 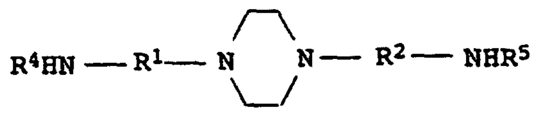 ,

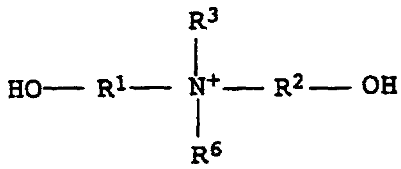 , 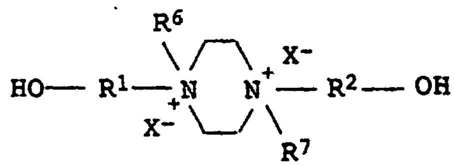

worin

| | |
|---|---|
| $R^1$ und $R^2$, | die gleich oder verschieden sein können, für $C_2$-$C_8$-Alkylen stehen, |
| $R^3$, $R^6$ und $R^7$, | die gleich oder verschieden sein können, für $C_1$-$C_6$-Alkyl, Phenyl oder Phenyl-$C_1$-$C_4$-alkyl stehen, |
| $R^4$ und $R^5$, | die gleich oder verschieden sein können, für H oder $C_1$-$C_6$-Alkyl stehen, |
| X- | für ein Anion, bevorzugt für Chlorid, Bromid, Jodid, $C_1$-$C_6$-Alkylsulfat oder $SO_4^{2-}/2$ steht. |

Gemäß einer weiteren geeigneten Ausführungsform handelt es sich bei der Komponente (B) um ein Amin der Formel:

$$R^{10}HN\text{-}Y\text{-}SO_3H$$

worin

Y für o-, m- oder p-Phenylen oder geradkettiges oder verzweigtes $C_2$-$C_6$-Alkylen steht, das gegebenenfalls durch 1, 2 oder 3 Hydroxygruppen substituiert ist, und

$R^{10}$ für ein Wasserstoffatom, eine $C_1$-$C_{12}$-Alkylgruppe (vorzugsweise $C_1$-$C_{10}$- und insbesondere $C_1$-$C_6$-Alkylgruppe) oder eine $C_5$-$C_6$-Cycloalkylgruppe steht, wobei die Alkylgruppe oder die Cycloalkylgruppe gegebenenfalls durch 1, 2 oder 3 Hydroxygruppen, Carboxylgruppen oder Sulfonsäuregruppen substituiert sein kann.

Bevorzugt handelt es sich bei dem Amin der obigen Formel um Taurin, N-(1,1-Dimethyl-2-hydroxyethyl)-3-amino-2-hydroxypropansulfonsäure oder 2-Aminoethylaminoethansulfonsäure.

Gemäß einer weiteren geeigneten Ausführungsform handelt es sich bei dem Amin um eine übliche α-, β- oder γ-Aminosäure, beispielsweise Glycin, Alanin, Valin, Leucin, Isoleucin, Phenylalanin, Tyrosin, Prolin, Hydroxyprolin, Serin, Threonin, Methionin, Cystein, Tryptophan, β-Alanin, Asparaginsäure oder Glutaminsäure.

Die Säuregruppen enthaltenden Polyurethane können durch Neutralisation (teilweise oder vollständig) in eine wasserdispergierbare Form überführt werden. Als Base für die Neutralisation können Alkalimetallbasen wie Natronlauge, Kalilauge, Natriumcarbonat, Natriumhydrogencarbonat, Kaliumcarbonat oder Kaliumhydrogencarbonat und Erdalkalimetallbasen wie Calciumhydroxid, Calciumoxid, Magnesiumhydroxid oder Magnesiumcarbonat sowie Ammoniak und Amine, wie Trimethylamin, Triethylamin, Triisopropylamin etc., verwendet werden. Die Neutralisation der Säuregruppen enthaltenden Polyurethane kann auch mit Hilfe von Mischungen mehrerer Basen vorgenommen werden, z. B. Mischungen aus einem Alkalihydroxid, wie Natronlauge und einem Amin, wie Triisopropanolamin. Die Neutralisation kann gewünschtenfalls partiell z. B. 10 bis 99 %, wie z. B. zu 20 bis 80 % oder vollständig, d. h. zu 100 % erfolgen.

Geladene kationische Gruppierungen lassen sich aus den vorliegenden tertiären Aminstickstoffatomen entweder durch Protonierung, z. B. mit Carbonsäuren wie Essigsäure, Propionsäure, Buttersäure und Milchsäure, oder durch Quaternisierung, z. B. mit Alkylierungsmitteln wie $C_1$- bis $C_4$-Alkylhalogeniden oder -sulfaten erzeugen. Beispiele solcher Alkylierungsmittel sind Ethylchlorid, Ethylbromid, Methylchlorid, Methylbromid, Dimethylsulfat und Diethylsulfat.

Die als Komponente B) geeigneten Verbindungen, die nur eine gegenüber Isocyanatgruppen reaktive Gruppe aufweisen, wirken als Abstoppmittel, die die Polyaddition unterbrechen. Sie können bei der Herstellung der erfindungsgemäßen Polymerisate gewünschtenfalls am Ende der Polyadditionsreaktion zugegeben werden, um gegebenenfalls noch vorhandene freie Isocyanatgruppen, zumindest teilweise, umzusetzen.

Bevorzugt werden als Komponente B) Verbindungen eingesetzt, die wenigstens zwei gegenüber Isocyanatgruppen reaktive Gruppen, wie z. B. Amino- und/oder Hydroxylgruppen und wenigstens eine weitere polare funktionelle Gruppe aufweisen.

Als Verbindungen B) können weiterhin die zuvor als Komponente der Präpolymere A) beschriebenen Polyetherole auf der Basis von cyclischen Ethern und Alkylenoxiden eingesetzt werden. Weiterhin sind auch α,ω-Diaminopolyether geeignet, die z. B. durch Umsetzung der Polyetherole mit Ammoniak erhältlich sind. Geeignete Verbindungen B) sind auch z. B. an einer Hydroxylgruppe alkoxiliertes Trimethylolpropan, wobei der Alkoxylatrest eine endständige Carboxylat- oder Sulfonatgruppe aufweist. Der Alkoxylatrest kann dabei z. B. Ethylenoxid, Propylenoxid und Mischungen davon eingebaut enthalten. Das Molekulargewicht dieser Verbindungen liegt in einem Bereich von etwa 500 bis 2 000. Sie sind z. B. als Tegomer®-Marken der Fa. Goldschmidt erhältlich.

Die Polyurethane enthalten als Komponente C) wenigstens eine Verbindung, ausgewählt unter Diaminen, Polyaminen und Mischungen davon in einem Anteil von etwa 0,1 bis 10 Gew.-%, bevorzugt 0,5 bis 7 Gew.-%, bezogen auf das Gesamtgewicht der Komponenten A) bis F), einpolymerisiert.

Geeignete Amine C) sind geradkettige und verzweigte, aliphatische und cycloaliphatische Amine mit im Allgemeinen etwa 2 bis 30, bevorzugt etwa 2 bis 20 Kohlenstoffatomen. Dazu zählen z. B. Ethylendiamin, 1,2-Diaminopropan, 1,3-Diaminopropan, 1,4-Diaminobutan, 1,5-Diaminopentan, 1,6-Diaminohexan, 1,7-Diaminoheptan, 1,8-Diaminooctan, 1,9-Diaminononan, 1,10-Diaminodecan, 1,11-Diaminoundecan, 1,12-Diaminododecan, Diethylentriamin, Triethylentetraamin, 4-Azaheptamethylendiamin, N,N'-Bis(3-aminopropyl)-butan-1,4-diamin, und Mischungen davon. Geeignete Polyamine C) weisen im Allgemeinen ein zahlenmittleres Molekulargewicht von etwa 400 bis 10 000, bevorzugt etwa 500 bis 8000 auf. Dazu zählen z. B. Polyamide mit endständigen, primären oder sekundären Aminogruppen, Polyalkylenimine, bevorzugt Polyethylenimine und durch Hydrolyse von Poly-N-vinylamiden, wie z. B. Poly-N-vinylacetamid, erhaltene Vinylamine sowie die zuvor genannten α,ω-Diamine auf der Basis von aminierten Polyalkylenoxiden. Copolymerisate, die α,β-ethylenisch ungesättigte Monomere mit entsprechenden funktionellen Gruppen, z. B. Aminomethylacrylat, Aminoethylacrylat, (N-Methyl)-aminoethylacrylat, (N-Methyl)-aminoethylmethacrylat etc., einpolymerisiert enthalten, eignen sich auch zur Einführung photochemisch oder radikalisch härtbarer Doppelbindungen in die Po-Polyurethane.

Die Polyurethane können zur weiteren Optimierung der Polymereigenschaften gegebenenfalls als Komponente D) wenigstens eine weitere Verbindung mit mindestens zwei gegenüber Isocyanatgruppen reaktiven Gruppen in einem Anteil von 0,01 bis 10 Gew.-%, bevorzugt etwa 0,1 bis 5 Gew.-%, bezogen auf das Gesamtgewicht der Komponenten A) bis F), einpolymerisiert enthalten.

Als Komponente D) können z. B. Polyole eingesetzt werden, deren Molekulargewicht im Allgemeinen in einem Bereich von etwa 62 bis 399 g/mol liegt. Dazu zählen z. B. Diole mit 2 bis 18 Kohlenstoffatomen, vorzugsweise 2 bis 10 C-Atomen, wie 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,3-propandiol, 2,2-Dimethyl-1,4-butandiol, 2-Ethyl-2-butyl-1,3-propandiol, Hydroxypivalinsäureneopentylglykolester, Di-ethylenglykol und Triethylenglykol. Geeignete Triole und höherwertige Polyole sind Verbindungen mit 3 bis 25, bevorzugt 3 bis 18, insbesondere bevorzugt 3 bis 6 C-Atomen. Beispiele für brauchbare Triole sind Glycerin oder Trimethylolpropan. Als höherwertige Polyole lassen sich beispielsweise Erythrit, Pentaerythrit und Sorbit einsetzen. Geeignet sind auch niedermolekulare Umsetzungsprodukte der Polyole, z. B. von Trimethylolpropan mit Alkylenoxiden, wie Ethylenoxid und/oder Propylenoxid. Diese niedermolekularen Polyole können einzeln oder als Gemische verwendet werden.

Geeignete Komponenten D) sind weiterhin Aminoalkohole mit 2 bis 16, vorzugsweise 3 bis 6 Kohlenstoffatomen, wie z. B. Monoethanolamin, Methylisopropanolamin, Ethylisopropanolamin, Methylethanolamin, 3-Aminopropanol, 1-Ethylaminobutan-2-ol, Methylendiethanolamin, 4-Methyl-4-aminopentan-2-ol und N-(2-Hydroxyethyl)-anilin und Mischungen davon.

Als Komponente D) können auch höhermolekulare Polyole mit einem zahlenmittleren Molekulargewicht im Bereich von etwa 400 bis 6 000 g/mol, bevorzugt 500 bis 4 000 g/mol, eingesetzt werden. Dazu zählen z. B. die zuvor bei der Komponente A) beschriebenen Polyesterole auf Basis von aliphatischen, cycloaliphatischen und/oder aromatischen Di-, Tri- und/oder Polycarbonsäuren mit Di-, Tri- und/oder Polyolen sowie die Polyesterole auf Lacton-Basis. Dazu zählen weiterhin die ebenfalls zuvor bei der Komponente A) beschriebenen Polyetherole, die durch Polymerisation von cyclischen Ethern oder durch Umsetzung von Alkylenoxiden mit einem Startermolekül erhältlich sind. Dazu zählen weiterhin auch übliche, dem Fachmann bekannte Polycarbonate mit endständigen Hydroxylgruppen, die durch Umsetzung der zuvor beschriebenen Diole oder auch von Bisphenolen, wie Bisphenol A, mit Phosgen oder Kohlensäurediestern erhältlich sind. Geeignet sind auch α,ω-Polyamidole.

Die zuvor genannten Komponenten D) können einzeln oder als Gemische eingesetzt werden.

Die Polyurethane können als Komponente E) wenigstens eine weitere verbindung mit einer gegenüber Isocyanatgruppen reaktiven Gruppe aufweisen. Bei dieser Gruppe kann es sich um eine Hydroxyl- oder eine primäre oder

sekundäre Aminogruppe handeln. Die erfindungsgemäßen Polyurethane können die Komponente E) in einer Menge von 0,01 bis 10 Gew.-%, bevorzugt 0,1 bis 5 Gew.-%, bezogen auf die Gesamtmenge der Komponenten A) bis F), einpolymerisiert enthalten.

Als Komponente E) können z. B. monofunktionelle Alkohole, wie z. B. Methanol, Ethanol, n-Propanol, Isopropanol etc., eingesetzt werden. Geeignete Komponenten E) sind auch Amine mit einer primären oder sekundären Aminogruppe, wie z. B. Methylamin, Ethylamin, n-Propylamin, Isopropylamin, Dimethylamin, Diethylamin, Di-n-propylamin, Diisopropylamin etc.

Bei der Komponente E) kann es sich auch um einwertige Polyetheralkohole mit einem zahlenmittleren Molgewicht im Bereich von etwa 500 bis 10 000 g/mol, vorzugsweise von 1000 bis 5000 g/mol, handeln. Einwertige Polyetheralkohole sind durch Alkoxylierung von einwertigen Startermolekülen, wie beispielsweise Methanol, Ethanol oder n-Butanol, erhältlich, wobei als Alkoxylierungsmittel Ethylenoxid oder Gemische von Ethylenoxid mit anderen Alkylenoxiden, besonders Propylenoxid, eingesetzt werden.

Durch diese Komponente E) können in den Polyurethanen somit, gegebenenfalls in end- und/oder seitenständig angeordneten Polyetherketten, vorliegende Polyethylenoxidsegmente eingebaut sein, die im Polyurethan neben den ionischen Gruppen den hydrophilen Charakter beeinflussen.

Die Verbindungen der genannten Art mit innerhalb von end- und/oder seitenständig angeordneten Polyetherketten vorliegenden Polyethylenoxideinheiten werden in solchen Mengen eingesetzt, dass in den Polyurethan-Dispersionen 0 bis 10 Gew.-%, vorzugsweise 0 bis 5 Gew.-%, innerhalb von end- und/oder seitenständig angeordneten Polyetherketten eingebauten Polyethylenoxideinheiten in den Polyurethanen vorliegen können. Die Gesamtmenge der hydrophilen Struktureinheiten (ionische Gruppen und Ethylenoxideinheiten der zuletzt genannten Art) wird dabei im Allgemeinen so gewählt, dass die Dispergierbarkeit der Polyurethane in Wasser gewährleistet ist.

Die Polyurethane umfassen als Komponente F) wenigstens ein Polyisocyanat in einem Anteil von etwa 10 bis 50 Gew.-%, bevorzugt etwa 15 bis 45 Gew.-%, bezogen auf das Gesamtgewicht der Komponenten A) bis F), einpolymerisiert. Geeignete Polyisocyanate F) sind ausgewählt unter Verbindungen mit 2 bis 5 Isocyanatgruppen, Isocyanatpräpolymeren mit mittleren Anzahl von 2 bis 5 Isocyanatgruppen, und Mischungen davon. Dazu zählen z. B. aliphatische, cycloaliphatische und aromatische Di-, Tri- und Polyisocyanate. Geeignete Diisocyanate F) sind z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat. Ein geeignetes Triisocyanat ist z. B. Triphenylmethan-4,4',4''-triisocyanat. Weiterhin geeignet sind Isocyanatpräpolymere und Polyisocyanate, die durch Addition der zuvor genannten Isocyanate an polyfunktionelle hydroxyl- oder amingruppenhaltige Verbindungen erhältlich sind. Weiterhin geeignet sind Polyisocyanate, die durch Biuret- oder Isocyanuratbildung entstehen. Bevorzugt werden Hexamethylendiisocyanat, trimerisiertes Hexamethylendiisocyanat, Isophorondiisocyanat, 2,4-Toluylendiisocyanat, 2,6-Toluylendiisocyanat, und Mischungen davon, eingesetzt.

Ein weiterer Gegenstand der Erfindung sind Polymerdispersionen, die wenigstens eines der zuvor beschriebenen Polymerisate in dispergierter Form enthalten. Die Herstellung der erfindungsgemäßen Polyurethandispersionen erfolgt nach üblichen, dem Fachmann bekannten Verfahren. Diese sind z. B. in Ullmann's Encyclopedia of Industrial Chemistry, 5. Aufl., Bd. A 21, VCH Weinheim, (1992), S. 678-680 beschrieben. Dazu zählt z. B. die Spontandispersion von Polyurethanionomeren nach dem Acetonverfahren, Präpolymer-Mischverfahren, Schmelzemulsionsverfahren, etc. Dazu zählt weiterhin das Ketimin- und Ketazin-Verfahren und die Dispersion von Precursoren, bei dem hydrophile Oligomere dispergiert werden.

Das Molmengenverhältnis von Isocyanatgruppen der Komponente F) zu gegenüber Isocyanatgruppen reaktiven Gruppen der Komponenten A) bis E) liegt im Allgemeinen in einem Bereich von etwa 0,9:1 bis 1,2:1, bevorzugt etwa 0,95:1 bis 1,1:1.

Zur Herstellung der erfindungsgemäßen härtbaren wässrigen Polymerdispersionen können z. B. die Komponenten A), B), F) und gegebenenfalls D) und/oder E) in der Schmelze oder in Gegenwart eines inerten, mit Wasser mischbaren Lösungsmittels, wie z. B. Aceton, Tetrahydrofuran, Methylethylketon oder N-Methylpyrrolidon zunächst zu einem isocyanatgruppenhaltigen Polyurethanpräpolymer umgesetzt werden. Die Reaktionstemperatur liegt dabei im Allgemeinen in einem Bereich von etwa 20 bis 160 °C, bevorzugt etwa 50 bis 100 °C. Dabei kann man z. B. den Ansatz unter Umgebungsdruck zum Rückfluss erhitzen. Zur Beschleunigung der Additionsreaktion können bekannte Katalysatoren, wie z. B. Dibutylzinndilaurat, Zinn-(II)-octoat, 1,4-Diazabicyclo[2.2.2]octan oder Amine, wie Triethyl-amin, eingesetzt werden. Um eine unerwünschte, vorzeitige Polymerisation der $\alpha,\beta$-ethylenisch ungesättigten Gruppen zu vermeiden, können gegebenenfalls bei der Herstellung des Polyurethans Polymerisationsinhibitoren zugesetzt werden. Dafür eignen sich z. B. Chinone, Phenole oder Phenolderivate, wie p-Benzochinon, Hydrochinon, p-Methoxyphenol, Phenothiazin, 2,2,6,6-Tetramethylpiperidin-1-yloxy, 4-Hydroxy-2,2,6,6-tetramethylpiperidin-1-yloxy etc. Geeignete Polymerisationsinhibitoren sind z. B. in Encyclopedia of Polymer Science & Technology, Bd. 7, 1967, S. 644-664, Verlag Wiley & Sons, New York-London-Sydney, beschrieben.

Nach der Herstellung des isocyanatgruppenhaltigen Polyurethanpräpolymers können gewünschtenfalls die

einpolymerisierten ionogenen Gruppen, wie zuvor bei der Komponente B) beschrieben, durch Neutralisation oder Quaternisierung ionisiert werden. Wird zur Herstellung der erfindungsgemäßen Polymerdispersionen als alleinige oder zusätzliche Komponente B) wenigstens eine Verbindung mit nur einer gegenüber Isocyanatgruppen reaktiven Gruppe eingesetzt, so erfolgt deren Zugabe im Allgemeinen erst gegen Ende der Umsetzung der übrigen Komponenten. Wird zur Herstellung der erfindungsgemäßen Polymerisate eine Komponente E) eingesetzt, die ebenfalls nur eine gegenüber Isocyanatgruppen reaktive Gruppe aufweist und somit als Abstopper wirkt, so erfolgt deren Zugabe im Allgemeinen auch erst gegen Ende oder nach der Umsetzung der übrigen Komponenten, gegebenenfalls auch erst nach Zugabe der Komponente C).

Abschließend wird das isocyanatgruppenhaltige Präpolymer mit der Komponente C) zu dem erfindungsgemäßen, im Wesentlichen isocyanatgruppenfreien Polyurethan umgesetzt, wobei eine Molmassenerhöhung stattfindet. Dabei können die isocyanatgruppenhaltigen Polyurethanpräpolymere entweder in das Dispergierwasser, welches die Komponente C) enthält, eingetragen werden, oder man gibt eine Mischung aus Komponente C) und Dispergierwasser zu den isocyanatgruppenhaltigen Polyurethanpräpolymeren. Die Menge an Komponente C) wird dabei so gewählt, dass ein im Wesentlichen isocyanatgruppenfreies Polyurethan erhalten wird. Gewünschtenfalls kann das Lösungsmittel nach Zugabe des Dispergierwassers abdestilliert werden. Die Menge des Dispergierwassers wird so bemessen, dass die resultierenden wässrigen Polyurethandispersionen einen Feststoffgehalt von etwa 10 bis 70 Gew.-%, vorzugsweise etwa 20 bis 60 Gew.-%, aufweisen.

Im Allgemeinen sind die erfindungsgemäßen Polyurethanpolymerisate selbstdispergierbar, so dass auf den Einsatz eines Emulgators und/oder eines Schutzkolloids verzichtet werden kann. Gewünschtenfalls können jedoch übliche, dem Fachmann bekannte Emulgatoren und Schutzkolloide, wie z. B. Homo- und Copolymerisate des Vinylpyrrolidons etc., eingesetzt werden.

Die erfindungsgemäßen härtbaren wässrigen Polymerdispersionen eignen sich vorzugsweise zur Herstellung von Beschichtungen, z. B. von flexiblen und gegebenenfalls saugfähigen Substraten wie Papier, Karton, Leder oder von nicht-flexiblen Substraten aus Metall oder Kunststoff. Vorzugsweise eignen sie sich zur Herstellung von hochwertigen, kratzfesten und chemikalienresistenten Lacküberzügen auf Holz. Dabei werden bereits nach dem Verdunsten des Wassers ohne Vernetzung klebfreie, staubtrockene Filme mit einer guten mechanischen Beanspruchbarkeit, wie z. B. einer hohen Härte, erhalten. So beträgt die Pendelhärte, gemessen nach DIN 53157 eines 20 Minuten bei 60 °C getrockneten Films mindestens 20 s, bevorzugt mindestens 30 s, insbesondere mindestens 40 s, speziell 50 s. Werden die noch nicht strahlengehärteten Filme auf ihre Klebfreiheit untersucht, so tritt im Wesentlichen keine Beschädigung der Beschichtung auf.

Die Vernetzung der Polyurethane kann mit energiereicher Strahlung wie UV-, Elektronen-, Röntgen- oder $\gamma$-Strahlung erfolgen. Dabei ist die UV-Härtung besonders bevorzugt. Sie kann gewünschtenfalls in Gegenwart üblicher Photoinitiatoren, wie z. B. aromatischer Ketonverbindungen, wie Benzophenon, Alkylbenzophenonen, Michlers Keton, Anthron, halogenierten Benzophenonen, 2,4,6-Trimethylbenzoyldiphenylphosphinoxid, Phenylglyoxylsäureestern, Anthrachinon und seinen Derivaten, Benzilketalen, Hydroxyalkylphenonen, etc. erfolgen. Dabei können auch Gemische dieser Verbindungen eingesetzt werden. Die Einsatzmenge der Photoinitiatoren beträgt im Allgemeinen etwa 0,01 bis 20 Gew.-%, bevorzugt 0,1 bis 10 Gew.-%, bezogen auf den Festgehalt der zu härtenden Komponenten.

Die Härtung der wässrigen Polymerdispersionen kann gewünschtenfalls auch thermisch radikalisch unter Zusatz der üblichen Polymerisationsinitiatoren erfolgen. Dazu zählen sämtliche unter den Härtungsbedingungen in Radikale zerfallende Verbindungen, wie z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. Dabei können auch Mischungen verschiedener Polymerisationsinitiatoren, z. B. Mischungen aus Wasserstoffperoxid und Natrium- oder Kaliumperoxodisulfat eingesetzt werden. Als Initiatoren geeignete organische Peroxide sind z. B. in der EP-A-536 597 beschrieben. Die Einsatzmenge der Polymerisationsinitiatoren beträgt im Allgemeinen etwa 0,01 bis 5 Gew.-%, bezogen auf die Menge der zu polymerisierenden Polyurethane. Als Initiatoren kommen außerdem Redoxkatalysatoren in Betracht, die als oxidierende Komponente z. B. mindestens eine der oben angegebenen Per-Verbindungen und als reduzierende Komponente z. B. Ascorbinsäure, Glucose, Sorbose, Ammonium- oder Alkalimetallhydrogensulfit, -thiosulfat, -hyposulfit, -pyrosulfit oder -sulfid, Metallsalze wie Eisen-II-Ionen oder Silberionen oder Natriumhydroxymethylsulfoxylat enthalten.

Die getrockneten, nicht UV-gehärteten Filme zeichnen sich im Allgemeinen durch eine hohe Beschichtungshärte und/oder durch eine gute Flexibilität aus. Überraschenderweise nimmt dabei die Flexibilität der Beschichtungen, die ein Epoxyacrylat umfassen, mit zunehmendem Acrylatgehalt der in den erfindungsgemäßen Polymerdispersionen eingesetzten, hydroxylgruppenhaltigen Präpolymeren A) zu. Die Pendelhärte eines etwa 20 min bei erhöhten Temperaturen, wie etwa 60 °C, getrockneten Films beträgt im Allgemeinen mindestens 20 s, bevorzugt mindestens 30 s, insbesondere mindestens 40 s, speziell mindestens 50 s. Die Pendelhärte eines strahlungsgehärteten Films beträgt 1 Stunde nach der Strahlungshärtung im Allgemeinen mindestens 160 s. Die mit den erfindungsgemäßen Polyurethandispersionen erhaltenen, UV-gehärteten Verfilmungen zeigen im Wesentlichen keine Verschlechterung der Pendelhärte im Anschluss an die Strahlungshärtung. So beträgt die Pendelhärte auch 12 Stunden nach der Strahlungshärtung im Allgemeinen mindestens 160 s. Zur Bestimmung der Flexibilität wurde die Erichsen-Tiefung nach DIN 53156 bestimmt. Dabei werden überraschenderweise auch bei Einsatz eines aromatischen Polyisocyanates, wie Toluylendiisocyanat, als Komponente F) Filme mit einer hinreichenden Flexibilität erhalten. Die Erichsen-Tiefung eines strahlungsgehärteten Films einer Polymerdispersion auf Basis eines erfindungsgemäßen Polymerisats beträgt dann 24 Stunden nach der UV-Härtung im Allgemeinen mindestens 3,0, bevorzugt mindestens 3,5. Es können auch höhere Werte, wie z. B. mindestens 4,0, vorzugsweise mindestens 5,0, erzielt werden. Setzt man zur Herstellung der erfindungsgemäßen Polymerisate mindestens ein aliphatisches und/oder cycloaliphatisches Polyisocyanat als Komponente F) ein, so werden Verfilmungen mit einer guten Flexibilität erhalten. Dann beträgt die Erichsen-Tiefung eines strahlungsgehärteten Films 24 Stunden nach der Strahlungshärtung im Allgemeinen mindestens 6,5, bevorzugt mindestens 7,0.

Die aus den erfindungsgemäßen härtbaren Polymerdispersionen erhaltenen Filme sind im Allgemeinen kratzfest. So beträgt die Bleistifthärte der Filme nach der Strahlungshärtung mindestens 2H.

Die erfindungsgemäßen Polymerdispersionen lassen sich durch übliche Verfahren, wie Spritzen, Walzen, Rakeln, Gießen, Streichen oder Tauchen auf unterschiedlichste Substrate applizieren. Dabei können die erfindungsgemäßen Polymerdispersionen als alleiniges Lackbindemittel oder mit in der Lacktechnologie üblichen Zusatzstoffen, wie z. B. Bindemitteln, Hilfsstoffen, Pigmenten, Farbstoffen oder Mattierungsmitteln, kombiniert werden.

Ein weiterer Gegenstand der Erfindung sind Beschichtungsmittel, die mindestens ein erfindungsgemäßes Polymerisat oder eine wässrige Polymerdispersion umfassen. Diese Beschichtungsmittel können gegebenenfalls ein Lösungsmittelgemisch aus Wasser und mindestens einem der zuvor genannten wassermischbaren Lösungsmittel aufweisen. Vorzugsweise sind diese Beschichtungsmittel im Wesentlichen frei von organischen Lösungsmitteln.

Die Erfindung wird anhand der nachfolgenden, nicht einschränkenden Beispiele näher erläutert.

Beispiele

Die Hydroxylzahl ist definiert als mg KOH/g Produkt. Ein geeignetes Verfahren zur Bestimmung der Hydroxylzahl wird z. B. von J. Makes und J. Horky in farbe und lack, 94. Jhrg. (1988), S. 898 ff., beschrieben. Die Bestimmung kann ebenfalls titrimetrisch nach folgender Vorschrift erfolgen:

1. Geräte und Hilfsmittel

Laborwaage Messgenauigkeit 0,01 g
Bechergläser 125 ml
Titroprozessor 636 (der Firma Metrohm)
Dosimat E 635, Dosimat 665 (der Firma Metrohm)
0,25 n methanolische KOH, Essigsäureanhydrid 5%ig in THF-Dioxan (Verhältnis 1:1), 4-Dimethylaminopyridin (DMAP) 1%ig in THF-Dioxan

2. Durchführung

2.1 Blindwert

10 ml DMAP-Lösung werden mit dem Dosimaten in ein sauberes Becherglas gegeben und anschließend 5 ml Essigsäureanhydrid-Lösung dazugegeben. Dann lässt man 5 Minuten abgedeckt reagieren und gibt 1 ml vollentsalztes Wasser zu. Nach weiteren 10 Minuten werden 100 ml eines Gemisches aus THF-Dioxan (Verhältnis 1:1) zugegeben und anschließend mit einer 0,25 n methanolischen KOH titriert.

2.2 Probe

Ca. 1 g Probe und 10 ml 4-Dimethylaminopyridin-Lösung werden mit dem Dosimaten 665 in ein Becherglas gegeben. Dann werden 5 ml Essigsäureanhydrid-Lösung zugegeben und die Lösungen 5 Minuten abdeckt reagieren gelassen. Nach Zugabe von 100 ml THF-Dioxan (Verhältnis 1:1) wird mit einer 0,25 n methanolischen KOH titrieren.

3. Auswertung

$$\text{OH-Zahl [mg KOH/g Substanz]} = \frac{(\text{Blindwert ml - Verbrauch Probe ml})*56{,}1\ \text{g/mol}*0{,}25\ \text{n}*\text{Titer KOH}}{\text{Einwaage in g (Feststoff)}}$$

Der Gehalt an polaren, funktionellen Gruppen, d. h. der Carboxyl-, Phosphonat-, Sulfonatgehalt wurde bestimmt über die Einwaage der Komponente B).

Der Feststoffgehalt der wässrigen Polymerdispersionen wurde bestimmt nach DIN 53216 Teil 1 (1 h, 125 °C).

Die Viskosität wurde in einem Rheomat 30 nach DIN 53019 bei einer Temperatur von 23 °C und einem Schergefälle D = 250 $s^{-1}$ bestimmt.

Der gewichtsmittlere Teilchendurchmesser wurde bestimmt über die Lichtstreuung in einem Malvern Autosizer C2 Lasermessgerät.

Der Isocyanatgruppengehalt wurde titrimetrisch bestimmt. Die Probeneinwaage variierte in Abhängigkeit vom erwarteten NCO-Gehalt (0 bis 1,5 % NCO: ca. 4 g; 1,5 bis 3,5 %: ca. 2,5 g; 3,5 bis 7 %: ca. 1 g). Die Probe wurde mit 100 ml Aceton verdünnt. Anschließend gab man 10 ml einer Dibutylaminlösung zu und titrierte am Titriprozessor mit 0,1 molarer Salzsäure. Zur Herstellung der Dibutylaminlösung wurden ca. 25 g Dibutylamin mit N-Methylpyrrolidon auf 1 l aufgefüllt und gut verrührt. Zur Ermittlung des Blindwertes wurden 10 ml dieser Lösung mit 0,1 molarer Salzsäure titriert. Der NCO-Gehalt wird gemäß

$$\text{Verbrauch Blindwert} - \text{Verbrauch Probe} : \text{Einwaage} \times 0{,}42 = \%\ \text{NCO}$$

berechnet.

Bei den Doppelbindungsgehalten handelt es sich um berechnete Werte.

A) Polyurethanherstellung

In einem 4-Halskolben, der mit Rührer, Tropftrichter, Thermometer und Rückflusskühler versehen war, wurden hydroxylgruppenhaltiges ungesättigtes Präpolymer nach Tabelle 1 mit den in Tabelle 2 angegebenen Mengen an Dimethylolpropionsäure, gegebenenfalls Kettenverlängerer, Aceton und Dibutylzinndilaurat vorgelegt und zum Rückfluss erhitzt. Dann wurde ein Diisocyanat in einem Anteil nach Tabelle 2 innerhalb einer Stunde zugetropft. Bei Rückflusstemperatur wurde das Reaktionsgemisch so lange gerührt, bis der Isocyanatgruppengehalt des Gemischs praktisch konstant blieb. Danach kühlte man auf 40 °C ab und neutralisierte mit der in Tabelle 2 angegebenen Menge Triethylamin. Nach Abkühlen auf Umgebungstemperatur gab man die Polyurethanlösung unter starkem Rühren in eine Mischung aus Ethylendiamin in Wasser gemäß Tabelle 2, wobei spontan eine Dispersion entstand. Das Aceton wurde dann im Vakuum bei 40 °C abdestilliert und die Dispersion abschließend durch Verdünnen mit Wasser auf den gewünschten Feststoffgehalt eingestellt. Die Eigenschaften der Dispersionen sind in Tabelle 3 wiedergegeben.

Tabelle 1:

| Hydroxylgruppenhaltige Präpolymere | | |
|---|---|---|
| Präpolymer | Typ | OH-Zahl[1) ] [mg KOH/g] |
| A | Polyesteracrylat auf Basis von Maleinsäure | 80 |
| B | Gemisch aus 60 Gew.-% A und 40 Gew.-% Bisphenol A-diglycidetherdiacrylat | 130 |
| C | Gemisch aus 40 Gew.-% A und 60 Gew.-% Bisphenol A-diglycidetherdiacrylat | 160 |
| D | Gemisch aus 26,7 Gew.-% A und 73,3 Gew.-% einer 70%igen Lösung von Bisphenol A-diglycidetherdiacrylat in Tripropylenglykoldiacrylat | 130 |
| E | Polyesteracrylat auf Basis von Adipinsäure | 80 |
| F | Gemisch aus 40 Gew.-% E und 60 Gew.-% Bisphenol A-diglycidetherdiacrylat | 160 |
| G | Gemisch aus 83 Gew.-% aliphatischem Polyurethanacrylat[2)] und 17 Gew.-% Bisphenol A-diglycidetherdiacrylat | 44 |
| H | Gemisch aus 40 Gew.-% aliphatischem Polyurethanacrylat[2)] und 60 Gew.-% Bisphenol A-diglycidetherdiacrylat | 130 |
| I | Umsetzungsprodukt aus Polyetheracrylat und Bisphenol A-diglycidetherdiacrylat | 160 |
| K | Umsetzungsprodukt aus 46 Gew.-% Polyetheracrylat mit 54 Gew.-% Bisphenol A-diglycidetherdiacrylat | 130 |

[1)] der Einzelverbindung bzw. des Gemisches

[2)] als 65%ige Lösung in Tripropylenglykoldiacrylat

Tabelle 2: Polyurethanherstellung

| Bsp. Nr. | Präpolymer nach Tab. 1 [g] | Dimethylolpropionsäure [g] | Dibutylzinndilaurat [g] | Aceton [g] | Isocyanat [g] | Triethylamin [g] | Ethylendiamin [g] | Kettenverlängerer [g] | Wasser [g] | Theor. NCO-Gehalt[4)] [%] |
|---|---|---|---|---|---|---|---|---|---|---|
| V1 | 150 A | 15 | 0,22 | 129 | 24,0 HDI[1)]<br>31,7 IPDI[2)] | 11,2 | 3,6 | ohne | 515 | 1,44 |
| 1 | 150 B | 17 | 0,24 | 131 | 30,8 HDI<br>40,7 IPDI | 12,7 | 3,6 | ohne | 416 | 1,39 |
| 2 | 150 C | 17 | 0,24 | 131 | 33,7 HDI<br>44,5 IPDI | 12,7 | 3,6 | ohne | 556 | 1,32 |
| 3 | 150 C | 17 | 0,24 | 131 | 69,8 TDI[3)] | 12,7 | 3,6 | ohne | 380 | 1,37 |
| 4 | 150 D | 20 | 0,26 | 134 | 67,1 TDI | 15,2 | 3,6 | ohne | 597 | 1,36 |
| V2 | 150 E | 15 | 0,22 | 129 | 24,0 HDI<br>31,7 IPDI | 11,2 | 3,6 | ohne | 353 | 1,44 |
| 5 | 150 F | 17 | 0,24 | 131 | 33,7 HDI<br>44,5 IPDI | 12,7 | 3,6 | ohne | 531 | 1,32 |
| V3 | 204 G | 15 | 0,22 | 172 | 22,7 HDI<br>30,5 IPDI | 11,2 | 3,6 | ohne | 430 | 1,69 |
| 6 | 150 H | 17 | 0,24 | 131 | 30,4 HDI<br>40,2 IPDI | 12,7 | 3,6 | ohne | 493 | 1,39 |

Fortsetzung Tabelle 2

| Bsp. Nr. | Präpolymer nach Tab. 1 [g] | Dimethylolpropionsäure [g] | Dibutylzinndilaurat [g] | Aceton [g] | Isocyanat [g] | Triethylamin [g] | Ethylendiamin [g] | Kettenverlängerer [g] | Wasser [g] | Theor. NCO-Gehalt[4] [%] |
|---|---|---|---|---|---|---|---|---|---|---|
| 7 | 74,9 I | 11 | 0,13 | 67,5 | 21,7 HDI[1]<br>28,6 IPDI[2] | 8,29 | 3,6 | ohne | 275 | 2,84 |
| 8 | 74,9 I | 15 | 0,15 | 70,6 | 24,0 HDI<br>31,7 IPDI | 11,2 | 3,6 | ohne | 481 | 2,33 |
| 9 | 150 K | 20,1 | 0,26 | 134 | 32,3 HDI<br>42,6 IPDI | 15,2 | 3,6 | ohne | 490 | 1,33 |
| 10 | 150 K | 20,1 | 0,26 | 134 | 66,8 TDI[3] | 15,2 | 3,6 | ohne | 417 | 1,19 |
| 11 | 150 K | 20,1 | 0,27 | 141 | 68,4 TDI | 15,2 | 3,6 | 9,00 PE-diol[6] | 400 | 1,30 |
| 12 | 150 K | 20,1 | 0,27 | 137 | 67,6 TDI | 15,2 | 3,6 | 4,50 PE-diol[6] | 391 | 1,33 |
| 13 | 150 K | 20,1 | 0,27 | 137 | 58,0 TDI<br>19,7 HDI-Isocyanurat | 15,2 | 3,6 | 4,50 PE-diol[6] | 632 | 1,29 |
| 14 | 150 K | 20,1 | 0,27 | 137 | 67,2 TDI | 15,2 | 3,6 | 4,50 PE-diol[7] | 392 | 1,33 |
| 15 | 150 K | 20,1 | 0,26 | 139 | 71,9 TDI | 15,2 | 3,6 | 4,50 PE-diol[6]<br>2,25 BD-1.4[8] | 401 | 1,30 |

| | | | | | | | | | | |
|---|---|---|---|---|---|---|---|---|---|---|
| 16 | 150 K | 20,1 | 0,26 | 134 | 66,8 TDI | 20 g NaOH 30%ig[5] | 3,6 | ohne | 561 | 1,36 |
| 17 | 150 K | 20,1 | 0,26 | 134 | 66,8 TDI | 10,6 | 3,6 | ohne | 377 | 1,36 |

[1] Hexamethylendiisocyanat
[2] Isophorondiisocyanat
[3] Isomerengemisch aus 80 % 2,4- und 20 % 2,6-Toluylendiisocyanat
[4] vor Zugabe Ethylendiamin und gegebenenfalls weiterer Kettenverlängerer
[5] anstatt Triethylamin
[6] Polyester aus Isophthalsäure, Adipinsäure und Hexandiol, Mn = 1 000
[7] *Polyester aus Isophthalsäure*, Adipinsäure und Hexandiol, Mn = 2 000
[8] Butandiol-1,4

B) Eigenschaften der getrockneten und der UV-gehärteten Filme

Die Filmdaten wurden an Filmen ermittelt, die mittels Filmziehrahmen (Spalthöhe 200 µm) appliziert wurden. Als Photoinitiator wurde Irgacure 500 (flüssige Zubereitung aus Benzophenon und 1-Hydroxycyclohexylphenylketon der Ciba Geigy) verwendet, der in 4 % bezogen auf Feststoffgehalt der Dispersion eingerührt wurde. Die Pendelhärte vor UV wurde nach 20-minütigem Trocknen bei 60 °C und anschließendem Abkühlen des Films auf 20 °C gemessen. Die Dispersion V3 bildete nach 14 Tagen Lagerung 2 Phasen aus, war also nicht langzeitstabil.

1. Bleistifthärte (24 h nach UV-Härtung):

Die Ergebnisse sind in Tabelle 3 wiedergegeben.

2. Pendelhärte:

Die Charakterisierung der Beschichtungshärte erfolgte durch Bestimmung der Pendeldämpfung analog DIN 53157. Hierzu wurden die strahlungshärtbaren Zusammensetzungen der Beispiele und der Vergleichsbeispiele mit einem Filmziehrahmen mit einer Spalthöhe von 200 µm auf Glas aufgebracht. Die so erhaltene Probe wurde zur Aushärtung 20 Minuten bei 60 °C getrocknet und die Pendeldämpfung vor UV-Härtung bestimmt. Dann wurden die Verfilmungen mit einer Bandgeschwindigkeit von 10 m/min in einem Abstand von 10 cm an einen Quecksilberdampf-Hochdruckstrahler (120 W/cm) zweimal vorbeigeführt. Anschließend wurde die Pendeldämpfung nach UV-Härtung mit einem Pendelgerät nach DIN 53157 (König) bestimmt. Die Angabe erfolgt in Sekunden. Die Ergebnisse sind in Tabelle 3 zusammengefasst.

3. Erichsen-Tiefung (24 h nach UV-Härtung):

Die Bestimmung der Flexibilität der Beschichtung erfolgte durch Ermittlung der Erichsen-Tiefung analog DIN 53156. Hierzu wurde die jeweilige Zubereitung mit einem Filmziehrahmen mit einer Spalthöhe von 200 µm auf BONDER-Blech 26S600 C aufgebracht. Zur Aushärtung wurde in der oben beschriebenen Weise mit einem Quecksilberdampf-Hochdruckstrahler (120 W/cm) belichtet. Anschließend wurde die Erichsen-Tiefung durch Eindrücken einer Metallkugel in die nicht beschichtete Seite des Blechs (DIN 53156) bestimmt. Die Ergebnisse sind in Tabelle 3 zusammengefasst.

Tabelle 3: Eigenschaften der getrockneten und der UV-gehärteten Filme

| Bsp. Nr. | Feststoffgehalt [%] | Hydroxylzahl [mg KOH/g] | Carboxylgehalt [Gew.-%] | Viskosität [mPas] | Teilchendurchmesser [nm] | pH-Wert | Bleistifthärte nach UV-Härtung | Pendelhärte vor UV-Härtung [s] | Pendelhärte nach UV 1h/12h [s] | Erichsen-Tiefung nach UV-Härtung | Doppelbindungsgehalt[1)] [mol/1000 g] |
|---|---|---|---|---|---|---|---|---|---|---|---|
| V1 | 33 | 80 | 2,08 | 16,0 | 266 | 7,87 | 2H | 17 | 152/157 | 6,4 | 2,67 |
| 1 | 38 | 130 | 2,19 | 491 | 179 | 8,02 | 2H | 24 | 174/172 | 6,5 | 2,39 |
| 2 | 32 | 160 | 2,13 | 609 | 175 | 8,07 | 2H | 57 | 177/182 | 8,0 | 2,34 |
| 3 | 40 | 160 | 2,20 | 547 | 198 | 7,90 | 4H | 133 | 192/198 | 3,6 | 2,36 |
| 4 | 30 | 130 | 2,57 | 1467 | 1921 | 8,27 | 5H | 89 | 205/216 | 5,8 | 2,67 |
| V2 | 40 | 80 | 2,08 | 217 | 1157 | 7,85 | H | 15 | 126/116 | 6,9 | 2,61 |
| 5 | 33 | 160 | 2,13 | 1119 | 102 | 8,14 | 2H | 56 | 178/177 | 7,0 | 2,31 |
| V3 | 40 | 44 | 1,71 | keine stabile Dispersion | | | | | | | 2,23 |
| 6 | 34 | 130 | 2,19 | 2052 | 431 | 8,12 | 2H | 98 | 160/163 | 8,4 | 2,07 |
| 7 | 35 | 160 | 2,44 | 1742 | 100 | 8,21 | 4H | 116 | 198/183 | 7,8 | 2,22 |
| 8 | 25 | 160 | 3,06 | 789 | 1082 | 7,90 | 4H | 137 | 166/180 | 8,4 | 2,05 |
| 9 | 35 | 130 | 2,50 | 696 | 286 | 8,05 | 4H | 20 | 174/171 | 6,5 | 2,99 |
| 10 | 38 | 130 | 2,57 | 317 | 194 | 8,31 | 4H | 88 | 181/188 | 4,1 | 3,08 |
| 11 | 40 | 129 | 2,48 | 73,6 | 163 | 7,74 | 4H | 35 | 191/191 | 5,2 | 2,79 |
| 12 | 40 | 130 | 2,52 | 294 | 208 | 8,25 | 4H | 85 | 176/192 | 6,9 | 3,02 |

Fortsetzung Tabelle 3

| Bsp. Nr. | Feststoffgehalt [%] | Hydroxylzahl [mg KOH/g] | Carboxylgehalt [Gew.-%] | Viskosität [mPas] | Teilchendurchmesser [nm] | pH-Wert | Bleistifthärte nach UV-Härtung | Pendelhärte vor UV-Härtung [s] | Pendelhärte nach UV 1h/12h [s] | Erichsen-Tiefung nach UV-Härtung | Doppelbindungsgehalt[1)] [mol/1000 g] |
|---|---|---|---|---|---|---|---|---|---|---|---|
| 13 | 30 | 130 | 2,43 | 821 | >1000 | 8,54 | 4H | 132 | 184/193 | 7,1 | 2,91 |
| 14 | 40 | 128 | 2,52 | 560 | 254 | 8,30 | 4H | 95 | 175/185 | 6,8 | 3,02 |
| 15 | 40 | 145 | 2,46 | 196 | 147 | 8,28 | 4H | 88 | 183/198 | 5,4 | 2,95 |
| 16 | 30 | 130 | 2,67 | 895 | >1000 | 8,66 | 4H | 90 | 173/179 | 6,1 | 3,18 |
| 17 | 40 | 130 | 1,84 | 46,9 | >1000 | 7,22 | 4H | 42 | 180/190 | 4,6 | 3,14 |

1) bezogen auf den Feststoffgehalt (berechnet)

**Patentansprüche**

1. Härtbares Polyurethanpolymerisat, welches

A) 40 bis 80 Gew.-%, bezogen auf das Gesamtgewicht der Komponenten A) bis F), wenigstens eines hydroxylgruppenhaltigen Präpolymers mit mindestens einer radikalisch oder photochemisch polymerisierbaren $\alpha$, $\beta$-ethylenisch ungesättigten Doppelbindung, wobei das Präpolymer A) ein Reaktionsprodukt oder eine Mischung aus

a) wenigstens einem Polyesteracrylat und/oder Polyetheracrylat und/oder Polyurethanacrylat und

b) wenigstens einem Epoxyacrylat

ist,

B) 0,1 bis 20 Gew.-%, bezogen auf das Gesamtgewicht der Komponenten A) bis F), wenigstens einer Verbindung mit mindestens einer gegenüber Isocyanatgruppen reaktiven Hydroxyl- und/oder primären oder sekundären Aminogruppe und zusätzlich wenigstens einer polaren funktionellen Gruppe,

C) 0,1 bis 10 Gew.-%, bezogen auf das Gesamtgewicht der Komponenten A) bis F), wenigstens einer Verbindung, ausgewählt unter Diaminen, Polyaminen und Mischungen davon,

D) 0 bis 20 Gew.-%, bezogen auf das Gesamtgewicht der Komponenten A) bis F), wenigstens einer weiteren von A), B), C) und E) verschiedenen Verbindung mit mindestens zwei gegenüber Isocyanatgruppen reaktiven Gruppen, wobei es sich um Hydroxylgruppen und Mischungen von Hydroxylgruppen und/oder primären oder sekundären Aminogruppen handelt,

E). 0 bis 20 Gew.-%, bezogen auf das Gesamtgewicht der Komponenten A) bis F), wenigstens einer Verbindung mit einer gegenüber Isocyanatgruppen reaktiven Gruppe,

F) 10 bis 50 Gew.-%, bezogen auf das Gesamtgewicht der Komponenten A) bis F), wenigstens eines Polyisocyanates einpolymerisiert enthält, und die Salze davon, **dadurch gekennzeichnet, dass** die Summe der Hydroxylzahlen der Komponenten A) und D) in einem Bereich von 121 bis 300 mg KOH/g liegt.

2. Polymerisat nach Anspruch 1, **dadurch gekennzeichnet, dass** die Summe der Hydroxylzahlen der Komponenten A) und D) in einem Bereich von 123 bis 250 mg KOH/g liegt.

3. Polymerisat nach einem der Ansprüche 1 oder 2, **dadurch gekennzeichnet, dass** die Hydroxylzahl des Präpolymers A) in einem Bereich von 121 bis 300 mg KOH/g liegt.

4. Polymerisat nach einem der vorhergehenden Ansprüche, **dadurch gekennzeichnet, dass** der Gehalt an polymerisierbaren $\alpha$,$\beta$-ethylenisch ungesättigten Doppelbindungen in einem Bereich von 1,0 bis 4,0 mol pro 1000 g Polymerisat liegt.

5. Polymerisat nach einem der vorhergehenden Ansprüche, **dadurch gekennzeichnet, dass** der Gehalt an polaren funktionellen Gruppen in einem Bereich von 1,3 bis 3,5 % liegt.

6. Polymerisat nach einem der vorhergehenden Ansprüche, dg, d. es die Komponente A) in einem Anteil von 50 bis 75 Gew.-%, bezogen auf das Gesamtgewicht der Komponenten A) bis F), einpolymerisiert enthält.

7. Polymerdispersion, enthaltend wenigstens ein härtbares Polymerisat nach einem der Ansprüche 1 bis 6 in dispergierter Form.

8. Beschichtungsmittel, das wenigstens ein Polymerisat nach einem der Ansprüche 1 bis 6 umfasst.

9. Beschichtungsmittel auf Wasserbasis, das wenigstens eine wässrige Polymerdispersion nach Anspruch 7 umfasst.

10. Verfahren zur Herstellung eines härtbaren Polyurethanpolymerisats nach einem der Ansprüche 1 bis 6 **dadurch**

**gekennzeichnet, dass** man

a) die Komponenten A), B), F) und gegebenenfalls D) und/oder E) zu einem isocyanatgruppenhaltigen Polyurethanpräpolymer umsetzt,

b) gegebenenfalls ionogene polare funktionelle Gruppen durch Neutralisation und/oder Quaternisierung ionisiert,

c) das isocyanatgruppenhaltige Präpolymer mit Komponente C) und gegebenenfalls mit Komponente E) zu einem im Wesentlichen isocyanatgruppenfreien Produkt umsetzt und gegebenenfalls mit Wasser dispergiert, und gegebenenfalls

d) das Reaktionsprodukt aus Stufe c) trocknet, bevorzugt durch Sprühtrocknung.

**11.** Verwendung von Polymerdispersionen nach Anspruch 7 zur Herstellung von Beschichtungen.

## Claims

**1.** A curable polyurethane polymer which comprises in copolymerized form

A) from 40 to 80% by weight, based on the overall weight of components A; to F), of at least one hydroxyl-containing prepolymer having at least one free-radically or photochemically polymerizable $\alpha,\beta$-ethylenically unsaturated double bond, wherein the prepolymer A) is a reaction product or a mixture of

a) at least one polyester acrylate and/or polyether acrylate and/or polyurethane acrylate and

b) at least one epoxy acrylate,

B) from 0.1 to 20% by weight, based on the overall weight of components A) to F), of at least one compound having at least one isocyanate-reactive hydroxyl group and/or primary or secondary amino group and, in addition, at least one polar functional group,

C) from 0.1 to 10% by weight, based on the overall weight of components A) to F), of at least one compound selected from diamines, polyamines and mixtures thereof,

D) from 0 to 20% by weight, based on the overall weight of components A) to F), of at least one further compound other than A), B), C) and E), having at least two isocyanate-reactive groups, which are hydroxyl groups and mixtures of hydroxyl groups and/or primary or secondary amino groups,

E) from 0 to 20% by weight, based on the overall weight of components A) to F), of at least one compound having an isocyanate-reactive group,

F) from 10 to 50% by weight, based on the overall weight of components A) to F), of at least one polyisocyanate,

or a salt thereof, wherein the sum of the hydroxyl numbers of components A) and D) lies within a range from 121 to 300 mg of KOH/g.

**2.** A polymer as claimed in claim 1, wherein the sum of the hydroxyl numbers of components A) and D) lies within a range from 123 to 250 mg of KOH/g.

**3.** A polymer as claimed in either of claims 1 and 2, wherein the hydroxyl number of the prepolymer A) lies within a range from 121 to 300 mg of KOH/g.

**4.** A polymer as claimed in any of the preceding claims, wherein the content of polymerizable $\alpha,\beta$-ethylenically unsaturated double bonds lies within a range from 1.0 to 4.0 mol per 1000 g of polymer.

**5.** A polymer as claimed in any of the preceding claims, wherein the content of polar functional groups lies within a

range from 1.3 to 3.5%.

**6.** A polymer as claimed in any of the preceding claims which comprises in copolymerized form from 50 to 75% by weight of component A), based on the overall weight of components A) to F).

**7.** A polymer dispersion comprising at least one curable polymer as claimed in any of claims 1 to 6 in dispersed form.

**8.** A coating composition which comprises at least one polymer as claimed in any of claims 1 to 6.

**9.** A water-based coating composition which comprises at least one aqueous polymer dispersion as claimed in claim 7.

**10.** A process for preparing a curable polyurethane polymer as claimed in any of claims 1 to 6, which comprises

a) reacting components A), B), F) and, if desired, D) and/or E) to give an isocyanate-functional polyurethane prepolymer,

b) ionizing any ionogenic polar functional groups by neutralization and/or quaternization,

c) reacting the isocyanate-functional prepolymer with component C) and, if desired, with component E) to give a product which is essentially free of isocyanate groups and, if desired, dispersing said product with water, and, if desired,

d) drying the reaction product from step c), preferably by means of spray drying.

**11.** The use of a polymer dispersion as claimed in claim 7 for producing coatings.

**Revendications**

**1.** Polymère de polyuréthanne durcissable, lequel contient, sous forme polymérisée,

A) 40% à 80% en poids, par rapport au poids total des composants A) à F), d'au moins un prépolymère contenant des groupes hydroxyle possédant au moins une double liaison $\alpha,\beta$-éthylénique polymérisable par voie radicalaire ou par voie photochimique, le prépolymère A) étant un produit réactionnel ou un mélange

a) d'au moins un polyester-acrylate et/ou un polyéther-acrylate et/ou un polyuréthanne-acrylate
b) d'au moins un époxyacrylate,

B) 0,1% à 20% en poids, par rapport au poids total des composants A) à F), d'au moins un composé possédant au moins un groupe hydroxyle et/ou amino primaire ou secondaire réactif envers les groupes isocyanate et en plus au moins un groupe fonctionnel polaire,
C) 0,1% à 10% en poids, par rapport au poids total des composants A) à F), d'au moins un composé choisi parmi les diamines, les polyamines et leurs mélanges,
D) 0% à 20% en poids, par rapport au poids total des composants A) à F), d'au moins un autre composé, différent de A), B), C) et E), possédant au moins deux groupes réactifs envers les groupes isocyanate, les groupes réactifs étant des groupes hydroxyle et des mélanges de groupes hydroxyle et/ou de groupes amino primaires ou secondaires,
E) 0% à 20% en poids, par rapport au poids total des composants A) à F), d'au moins un composé possédant un groupe réactif envers les groupes isocyanate,
F) 10% à 50% en poids, par rapport au poids total des composants A) à F), d'au moins un polyisocyanate,

et les sels de celui-ci, **caractérisé en ce que** la somme des indices d'hydroxyle des composants A) et D) va de 121 mg de KOH/g à 300 mg de KOH/g.

**2.** Polymère selon la revendication 1, **caractérisé en ce que** la somme des indices d'hydroxyle des composants A) et D) va de 123 mg de KOH/g à 250 mg de KOH/g.

**3.** Polymère selon l'une quelconque des revendications 1 ou 2, **caractérisé en ce que** l'indice d'hydroxyle du prépolymère A) va de 121 mg de KOH/g à 300 mg de KOH/g.

**4.** Polymère selon l'une quelconque des revendications précédentes, **caractérisé en ce que** la teneur en doubles liaisons α,β-éthyléniques polymérisables va de 1,0 mole à 4,0 moles pour 1000 g de polymère.

**5.** Polymère selon l'une quelconque des revendications précédentes, **caractérisé en ce que** la teneur en groupes fonctionnels polaires va de 1,3% à 3,5%.

**6.** Polymère selon l'une quelconque des revendications précédentes, **caractérisé en ce qu'**il contient, sous forme polymérisée, 50% à 75% du composant A), par rapport au poids total des composants A) à F).

**7.** Dispersion de polymère, contenant au moins un polymère durcissable selon l'une quelconque des revendications 1 à 6 sous forme dispersée.

**8.** Matière de revêtement, qui comprend au moins un polymère selon l'une quelconque des revendications 1 à 6.

**9.** Matière de revêtement à base d'eau, qui comprend au moins une dispersion aqueuse de polymère selon la revendication 7.

**10.** Procédé de préparation d'un polymère de polyuréthanne durcissable selon l'une quelconque des revendications 1 à 6, **caractérisé en ce que** l'on

a) fait réagir les composants A), B), F) et éventuellement D) et/ou E) pour former un prépolymère de polyuréthanne contenant des groupes isocyanate,
b) ionise éventuellement les groupes fonctionnels polaires ionogènes au moyen d'une neutralisation et/ou d'une quaternisation,
c) fait réagir le prépolymère contenant des groupes isocyanate avec le composant C) et éventuellement avec le composant E) pour former un produit essentiellement exempt de groupes icocyanate et on le disperse éventuellement dans de l'eau et, éventuellement,
d) sèche le produit réactionnel de l'étape C), de préférence au moyen d'un séchage par pulvérisation.

**11.** Utilisation de dispersions de polymère selon la revendication 7 pour la fabrication de revêtements.